Europäisches Patentamt

European Patent Office

Office européen des brevets

(11) Publication number: 0 388 182
A2

# (12) EUROPEAN PATENT APPLICATION

(21) Application number: 90302724.1

(22) Date of filing: 14.03.90

(51) Int. Cl.5: B01D 59/34

(30) Priority: 15.03.89 US 323641

(43) Date of publication of application:
19.09.90 Bulletin 90/38

(84) Designated Contracting States:
BE DE FR GB NL

(71) Applicant: GTE PRODUCTS CORPORATION
1209 Orange Street
Wilmington Delaware 19801(US)

(72) Inventor: Grossman, Mark W.
249 Rutledge Road
Belmont, MA 02178(US)
Inventor: Maya, Jakob
25 Marshall Street
Brookline, MA 02146(US)
Inventor: Lagushenko, Radomir
108 University Road
Brookline, MA 02146(US)

(74) Representative: Bubb, Antony John Allen et al
GEE & CO. Chancery House Chancery Lane
London WC2A 1QU(GB)

(54) Method and apparatus to measure mercury density in a flow reactor used for HG-196 isotope separation.

(57) Method and apparatus for measuring the change in the transmission of the photochemical light radiation in a $^{196}$Hg enrichment process in order to determine the mercury density in $^{196}$Hg, comprises a conduit for conveying a flow of mercury gas, and an optical sensor disposed in a non-packed region of the conduit. In a method of use of the apparatus the transmission of ultraviolet light of 253.7 nm wavelength is monitored.

FIG. I

EP 0 388 182 A2

# METHOD AND APPARATUS TO MEASURE MERCURY DENSITY IN A FLOW REACTOR USED FOR HG-196 ISOTOPE SEPARATION

The present invention is directed to a method and apparatus useful in the isotopic enrichment of a predetermined isotope of mercury (Hg) from a naturally occurring mercury mixture. While the present invention may be used in the enrichment of any one of the seven naturally occurring isotopes of mercury ($^{202}$Hg, $^{200}$Hg, $^{199}$Hg, $^{201}$Hg, $^{198}$Hg, $^{204}$Hg, and $^{196}$Hg,) it has particularly advantageous application in the photochemical enrichment of the $^{196}$Hg isotope, which has a natural abundance of only about 0.146 percent.

Photochemical mercury enrichment processes are well known and have been well documented in the literature. See for example, Webster and Zare, J. Phys. Chem., 85: 1302 (1981); McDowell et al., Can. J. Chem., 37: 1432 (1959); Gunning and Swartz, Adv. Photochem., 1: 209 (1963) and U.S. Pat. Nos., 4,678,550, 4,648,951, and 4,514,363, the teachings of which are hereby incorporated herein by reference.

Many devices utilize mercury in their operation, particularly in the field of electric lamps and lighting. Such devices include arc discharge lamps which typically employ mercury as one of the vaporizable components therein. See, for example, Waymouth, Electric Discharge Lamps, MIT Press 1971 for a description of the basic principles of such lamps.

In U.S. Pat. No. 4,379,252, (the '252 patent), the advantages of utilizing higher than normal levels of $^{196}$Hg in the Hg added to fluorescent lamps are described and include unexpectedly high efficiency gains in light output. The disclosure of this patent is hereby incorporated herein by reference.

The drawback of using this isotope lies in its high cost. For example, using conventional enrichment techniques, mercury which has been enhanced to contain about 35% of the $^{196}$Hg isotope can cost about $500 per milligram. While only sub-milligram quantities of this isotope need be added to an incandescent lamp to afford beneficial results, economic realities always play a part in consumer products. Accordingly, it is easy to understand why more economical methods of obtaining this isotope continue to be sought.

Isotopically enriched mercury can be produced by a number of methods. One method involves photosensitized chemical reactions utilizing elemental mercury and various compounds. The compounds HCl and $O_2$ react with mercury atoms when the mercury atoms are excited by resonance radiation, in particular, 2537Å radiation produced in a Hg ($^3$P - $^1$S$_o$) transition generating isotopically selective reactions. Thus, the Hg compound formed contains Hg enriched in a particular isotope, and the Hg must be separated from the compound into its liquid or free state (i.e., elemental Hg)) in order to recover the isotopically enriched metal.

The following documents are recited as general background information with respect to the subject matter of the present invention. To the extent deemed necessary by artisans of ordinary skill in the art to which this invention pertains, the teachings of these documents are hereby incorporated herein by reference.

Grossman, U.S. Patent No. 4,713,547;

Grossman et al., U.S. Patent No. 4,678,550;

Maya, U.S. Patent No. 4,527,086;

Durbin, U.S. Patent No. 4,514,363;

Work et al., U.S. Patent No. 3,379,252;

Botter nee Bergheaud et al., U.S. Patent No. 3,983,019;

Smith et al., U.S. Patent No. 3,897,331;

Grossman et al., U.S.S.N. 815,150, filed 31 December 1985;

European Patent Publication No. 0 281 687, published 14 September 1988, claiming priority of U.S.S.N. 947,217, filed 29 December 1986;

European Patent Publication No. 0 280 788, published 7 September 1988, claiming priority of U.S.S.N. 947, 216, filed 29 December 1986;

and Maya et al., Science, 226: 435-436 (1984).

The present invention is directed to a method for measuring the change in the transmission of the photochemical light radiation in a $^{196}$Hg enrichment process in order to determine the mercury density in $^{196}$Hg.

A 253.7 nm transmission measurement technique is utilized wherein the change in transmission of the photochemical light radiation is measured in order to determine the mercury density in the $^{196}$Hg isotope separation process. A time dependent transmission measurement is made to distinguish between U.V. attenuation due to density increase and due to product deposition.

Because of the Hg hyperfine structure, radiation transport and collisional effects, as well as the use of a mercury vapor filter it is advantageous to utilize a computer model to generate a relationship between the radiation transmitted at operating mercury density and the actual mercury density in the system. For further details, see Mitchell and Zemanski, Resonance Radiation and Exciting Atoms, Macmillan, New York 1934, at page 189. This has verified near saturated vapor conditions at the upstream reaction of the photochemical reactor.

## BRIEF DESCRIPTION OF THE DRAWING

Figure 1 is a schematic of the experimental system employed in the process of the present invention.

Figure 2 is a calibration curve of attenuation ($I/I_o$) as a function of mercury pressure.

Figure 3 is a graphic plot showing mercury density by the change in voltage over time.

Figure 4 illustrates one preferred monoisotopic lamp used in the process of the present invention.

The measurement of the Hg density in the reaction region in a $^{196}$Hg isotope separation system is used to verify that the carrier gas is at or near saturated conditions. One method of doing this measurement is to employ Beer's law

$$I = I_o e^{-kx} \qquad (1)$$

where $I_o$ is the radiation transmitted for no Hg vapor and $I$ is the transmission for a vapor absorption coefficient $K$, proportional to the mercury density. The parameter $x$ represents the distance the radiation traverses through the mercury vapor.

In my copending application Serial No. 07/109,020, filed 10/15/87, there is a discussion of the generalization of Beer's law needed to take into account the line shape of the absorbing media:

$$\text{that is,} \quad A = 1 - \frac{I}{I_o} = 1 - \frac{I_o(v)\, e^{-k(v)N_a x}\, dv}{I_o(v)\, dv} \qquad (2)$$

Thus, if one wishes to find $N_a$, $x$ is known from the experimental apparatus, $k(v)$ and $I_o(v)$ are calculated using a computer model and known lamp, filter and process conditions. Thus $I/I_o$ can be calculated versus $N_a$. This relationship is referred to as a calibration curve.

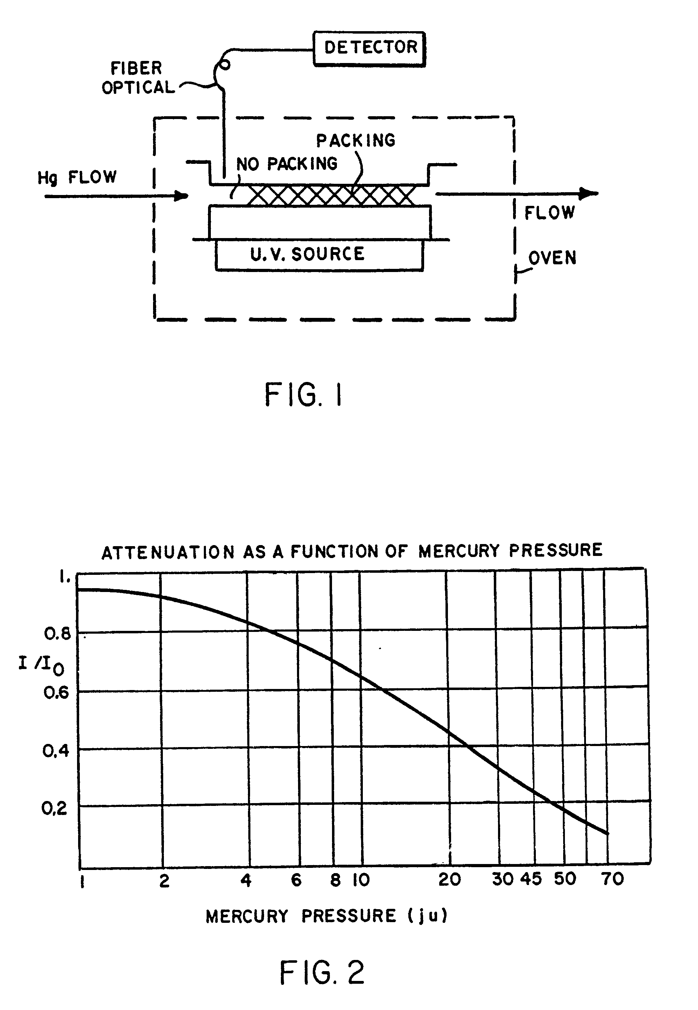

Figure 1 is a schematic of the experimental system used in the process of the present invention. Figure 2 shows the calibration curve and Table I shows the various parameters utilized to compute the curve. Measuring $I/I_o$ then permits determination of $N_a$.

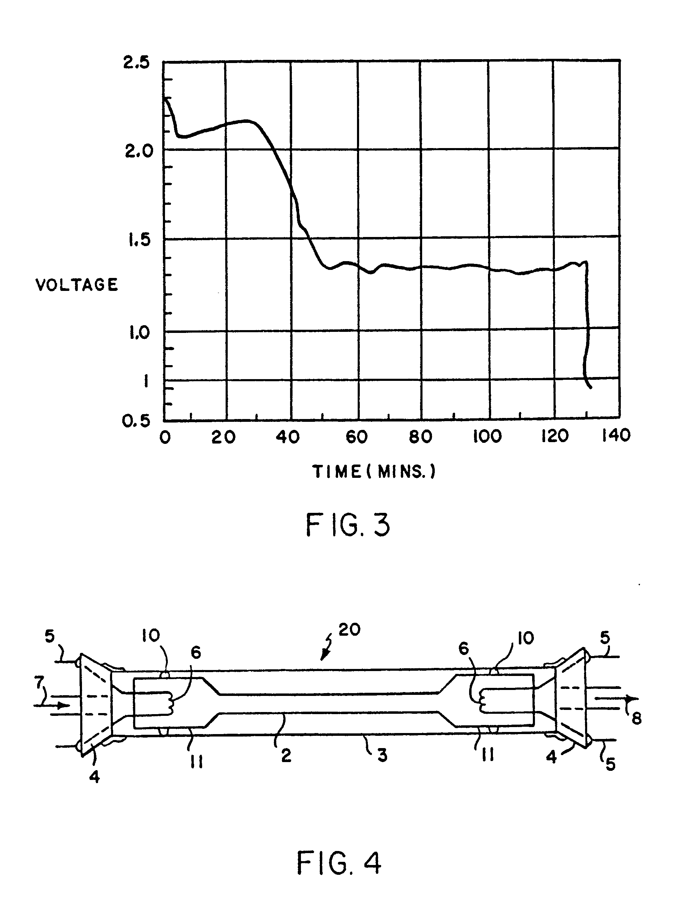

This technique can be further improved by simplifying the measurement of $I_o$ via use of a valve to isolate the Hg supply and reactor just prior to the density measurement. Figure 3 shows the voltage transmission $I$ as a function of time. The large changes in $I$ from 2.1 volts to 1.3 volts is due to the increasing Hg reservoir temperature. By diffusion, mercury is transported to the reactor.

The use of a valve to isolate the Hg reservoir would eliminate this transient. The very rapid drop from 1.3 volts to 0.7 volts is a further increase in Hg density as the carrier gas flow starts. At about 0.72 volts the rate of decrease in $I$ starts to lessen appreciably. This marks the point at which product deposition on the reactor wall becomes appreciable while the mercury density has reached a steady value.

For this case the $I/I_o$ value was found to be 0.25 implying a $P_{Hg}$ = 39 mT or a saturated vapor equilibrium temperature of 67°C. The entrainment area temperature varied over a range of 70°C to 73°C. Part of the discrepancy could be due to the error in measuring $I_o$ or $I$. Further positioning of the optical fiber may not be accurate enough or the collimation of the transmitted signal may not be great enough to correspond to that assumed for calculating the calibration curve, Figure 2.

Additionally, the manifold connecting the reactor rubes and the mercury reservoir may be slightly cooler than 70°C to 73°C resulting in a lower $P_{Hg}$. In order to obtain a greater degree of precision in the $P_{Hg}$ measurement the above details should be considered for future measurements.

TABLE I

| Parameters for Density Measurement Calibration Curve | |
|---|---|
| Lamp Parameters | |
| cold spot | 19°C |
| wall temperature | 75°C |
| diameter | 10 mm |
| Argon fill pressure | 2.0 Torr |
| operating current | 1.0 Amp |
| Filter Parameters | |
| cold spot | 40°C |
| fill gas | hydrogen |
| fill gas pressure | 10 Torr |
| Mercury Isotope distribution | (50% depleted in $^{196}$Hg relative to natural Hg) |
| Reactor Conditions | |
| reactor tube diameter | 22 mm |
| HCl pressure | 3T |
| He pressure | 1T |
| Optical Received | |
| transmitted beam | collimated, passing through reactor tube minor diameter |

All of the standard elements of the reactor system, i.e., the lamp, the filter, and the reactor vessel are formed of a material which is transparent to the desired excitation radiation, particularly 253.7 nm (2537 Å) for [196]Hg. One preferred material is quartz. While the lamp used in the reactor of the present invention may be any low pressure (e.g., about 2.5 Torr) electric discharge type lamp which transmits radiation of about 253.7 nm, those using microwave cavities for the excitation are preferred.

An especially preferred lamp comprises an electroded mercury-inert gas lamp. At least two electrodes are positioned and sealed at each end of a sealed lamp envelope which contains mercury vapor and one or more inert gases. The sealed lamp envelope is surrounded at least in part by an elongated tube which defines a region for controlling a heat exchange medium which controls the temperature of the inner, sealed lamp envelope.

In one embodiment, uniform temperature is created in the Hg lamp by circulating $H_2O$ at a predetermined temperature about an isolated section of the lamp. Other fluids, or inert gases such as argon, helium, xenon and neon, can be selected depending on their boiling point behavior to provide the desired uniform temperature of the inner discharge envelope.

The circulating heat transfer medium also prevents the formation of $O_3$ (ozone) by purging $O_2$ in the vicinity of the lamp. Ozone is created when $O_2$ is exposed to 185 nm radiation which may be emitted by the lamp. Ozone, in turn, absorbs various wavelengths of radiation emitted from the lamp. This is undesirable because radiation having a wavelength of 253.7 nm, useful for the photochemical separation of $^{196}$Hg, is absorbed of $O_3$. Thus, in a preferred embodiment, a fluid or inert gas is circulated about the entire exterior of the lamp envelope, thereby purging all of the $O_2$ from the immediate vicinity of the envelope. This allows for a greater emission intensity of the particular, desired radiation from the lamp envelope.

In a preferred embodiment, the outer lamp jacket comprises a quartz cylinder. This outer jacket serves several purposes. First, it allows for the use of a gas purge, if desired, for eliminating $O_2$ about the transmission section, thereby reducing $O_3$ formation. Second, if the outer jacket is designed to be demountable, it permits the interchange of different inner lamp envelopes. This makes possible the isolation of different Hg isotopic distributions using the same outer jacket. Also, lamp envelopes having different diameters can be used to affect the emitted linewidth of radiation.

The fact that the outer tube can be demountable allows for the use of outer tubes of different types of materials which can selectively filter certain emitted wavelengths. For example, by changing the outer tube material to Vycor 7910, it is possible to filter wavelengths below 200 nm thereby eliminating ozone formation in the region surrounding the lamp.

Figure 4 illustrates the preferred lamp which is used in the reactor of this invention.

The mercury lamp 20 of Figure 4 comprises an inner lamp envelope 2 and an outer jacket 3. In the preferred embodiment, both the envelope 2 and the outer jacket are constructed of quartz. The envelope 2 can be of various diameters depending on the desired optical depth. A larger diameter provides greater power density and broader bandwidth. For the isotopic separation of $^{196}$Hg, the inner diameter of the envelope is typically about 10 nm. The envelope 2 typically contains a source of Hg such as elemental Hg as well as an inert gas such as argon. However, any inert gas which is compatible with Hg vapor can be used. Typically, between about 1 and 2 mg of Hg is contained within lamp envelopes which have an inner diameter of about 10 mm. The length of the lamp can be from about 30-150 cm with a preferred length of about 40 cm.

A tapered stopper 4, typically of an elastomeric material, is disposed at each distal end of the outer jacket 3 and serves to substantially center the outer jacket around at least one section of the envelope 2. Furthermore, the tapered stopper guides and positions an electrode lead 5 through both the stopper and the outer jacket, and into the envelope where it provides current for the electrodes 6. In the preferred embodiment, the electrodes are shaped as coils and able to withstand a current of at least about 5 amperes. The tapered stoppers also contain openings in their centers which provide for an inlet 78 and outlet 8 stream of circulating heat transfer medium which is preferably water. The heat transfer medium circulates about at least one portion of the inner discharge envelope 2. The heat transfer medium then exits the lamp at outlet 8 contained in the outer jacket. Tubes, 11, preferably comprising a heat resistant glass are connected to each end of the envelope to provide regions to contain the electrodes and to further provide regions for mounting the envelope within the jacket. These tubes 11 are preferably separated from the outer tube with spacers 10 preferably comprising elastomeric materials. It is pointed out that the spacers 11 must have openings which allow the heat transfer medium to travel through the lamp.

The temperature of the inner envelope 2 is controlled by the temperature of the circulating heat transfer medium. As the temperature of the heat transfer medium is increased or decreased, the corresponding temperature of the inner envelope also increases or decreases. The linewidth of the emitted radiation is typically affected greatly by temperatures between 15°C and 50°C. The emission intensity depends strongly on the temperature of the inner envelope.

The entire lamp assembly can be placed within a mercury vapor filter. In one preferred embodiment, the filter comprises a hollow, axial elongated torus containing mercury vapor and an inert gas. This structure can be formed by the combination of two tubes, preferably quartz, where an inner tube is inserted into an outer tube and the tubes are sealed at both ends. This encloses a medium which can be made to contain a gaseous Hg vapor medium which transmits wavelengths of light desirable for the photochemical separation of $^{196}$Hg or specific isotopes of Hg.

In a preferred embodiment of this invention $^{196}$Hg is produced by enriching mercury compounds using radiation with a wavelength of 253.7 nm. The control of the specific wavelength is very dependent upon the vapor equilibrium temperature within the lamp envelope, which depends, in turn, upon the lowest temperature within the envelope. The vapor pressure of Hg within the envelope (for useful mercury isotope separation) and the intensity of the emitted radiation are proportional with a variation of about 10-15%.

If the intensity of radiation emitted from the lamp increases, the corresponding linewidth of the emitted radiation also increases. This causes other isotopes of mercury to become excited. Such an effect is undesirable, as it leads to a separation which yields a product having lower isotopic specificity. Thus, it is important to control the vapor pressure of the lamps to ensure that radiation of the proper linewidth is emitted. For a further explanation of the relationship between lamp temperature, radiation intensity and linewidth of the radiation see Maya et al., Science, 226: 435-436 (1984), the teachings of which are incorporated herein by reference.

The present invention has been described in detail, including the preferred embodiments thereof. However, it will be appreciated that those skilled in the art, upon consideration of the present disclosure, may make modifications and/or improvements on this invention and still be within the scope and spirit of this invention as set forth in the following claims.

**Claims**

1. A method of measuring the change in the transmission of the photochemical light radiation in a $^{196}$Hg enrichment process in order to determine the mercury density in $^{196}$Hg, said method comprising monitoring the 253.7 nm transmission in such a process, such that the changes in said transmission enable the solution of the following equation:

$$I = \frac{\int I_o\, e^{-kx}\, dv}{\int I_o\, dv}$$

wherein :

$I_o$ is the radiation transmitted for no Hg vapor;

I is the transmission for a vapor absorption coefficient K, proportional to the mercury density;

v is the frequency; and

x represents the distance the radiation traverses through the mercury vapor.

2. The method of claim 1, which further comprises distinguishing between U.V. attenuation due to density increase and U.V. attenuation due to product deposition.

3. Apparatus useful for measuring the density of mercury in a mercury isotope enrichment process, said apparatus comprising:

sensor means for use with a narrow wavelength ultraviolet light beam source and an ultraviolet detector;

conduit means for conveying a flow of mercury gas, being at least partially filled with a suitable reaction packing material;

wherein said sensor means is disposed in the non-packed region of said conduit means.

DETECTOR

FIBER
OPTICAL

PACKING

NO PACKING

Hg FLOW

FLOW

U.V. SOURCE

OVEN

FIG. I

ATTENUATION AS A FUNCTION OF MERCURY PRESSURE

$I/I_0$

MERCURY PRESSURE (ju)

FIG. 2

FIG. 3

FIG. 4